Europäisches Patentamt

(19) European Patent Office

Office européen des brevets

(11) Numéro de publication: **0 125 716**
**B1**

(12) **FASCICULE DE BREVET EUROPEEN**

(45) Date de publication du fascicule du brevet:
**15.07.87**

(21) Numéro de dépôt: **84200583.7**

(22) Date de dépôt: **25.04.84**

(51) Int. Cl.⁴: **B 21 F 27/10,** B 21 F 23/00

(54) **Procédé et dispositif d'alimentation en fils de trame de machines à souder des treillis métalliques.**

(30) Priorité: **03.05.83 LU 84785**

(43) Date de publication de la demande:
**21.11.84 Bulletin 84/47**

(45) Mention de la délivrance du brevet:
**15.07.87 Bulletin 87/29**

(84) Etats contractants désignés:
**AT BE CH DE FR GB IT LI NL SE**

(56) Documents cités:
**DE - B - 1 765 328**
**FR - A - 2 305 253**
**US - A - 3 086 639**
**US - A - 3 372 815**

(73) Titulaire: **Decoux, Pierre, 6, Grand'Place,
B-5950 Orp-Jauche (BE)**

(72) Inventeur: **Decoux, Pierre, 6, Grand'Place,
B-5950 Orp-Jauche (BE)**

(74) Mandataire: **De Brabanter, Maurice et al, Bureau
VANDER HAEGHEN 63 Avenue de la Toison d'Or,
B-1060 Bruxelles (BE)**

## Description

L'invention concerne un procédé et un dispositif d'alimentation en fils de trame de machines à souder des treillis métalliques, permettant d'augmenter la cadence d'alimentation en répondant ainsi aux performances des machines à souder actuelles, voir préambules de la revendication 1 et de la revendication 3.

Par «fils de chaîne» et «fils de trame», on entendra dans le présent mémoire des fils généralement en métal quelconque, par exemple en acier, présentant une section de dimension et de forme quelconques, par exemple une section circulaire ou crénelée.

Pour fabriquer des treillis soudés, on fait avancer des fils de chaîne plus ou moins proches les uns des autres, suivant le type et la largeur du treillis à obtenir, et sur ces fils on dépose et soude les fils de trame réunissant les fils de chaîne.

Les fils de trame doivent être, préalablement à leur mise en œuvre, dressés et coupés à longueur.

Généralement, les «baguettes» ainsi obtenues sont dressées et coupées préalablement, transportées vers la machine à souder et déposées habituellement dans un magasin ou autre dispositif duquel elles sont puisées suivant nécessité. Ce procédé demande un stockage et une manipulation.

Dans certaines machines, ces baguettes sont injectées à la demande en partant de dispositifs de dressage et de coupe disposés perpendiculairement aux fils de chaîne, ce qui réduit la cadence de travail par le fait que les fils de trame doivent parcourir toute la largeur de la chaîne avant de pouvoir être soudés.

On peut aussi disposer une ou plusieurs dresseuses au-dessus du magasin de la soudeuse et perpendiculairement aux fils de chaîne, ce qui nécessite un emplacement considérable et provoque un encombrement rendant difficiles les interventions de réglage et de maintenance sur les soudeuses et les dresseuses.

On connaît par le document DE-B-1 765 328 un procédé et un dispositif, dans lesquels on fait avancer une nappe de fils de chaîne parallèles vers un poste de soudage, et des fils de trame découpés à longueur vers le même poste de soudage.

La présente invention a pour objet un procédé du type indiqué dans le paragraphe précédent, ce dispositif étant caractérisé en ce qu'on fait avancer les fils de chaîne et les fils de trame dans sensiblement la même direction et qu'on fait subir aux fils de trame, situés à un niveau supérieur à celu des fils de chaîne, sous l'effet de la pesanteur, un changement de direction d'une amplitude telle que ces fils de trame s'étendent dans une direction sensiblement perpendiculaire aux fils de chaîne lorsqu' ils atteignent ceux-ci, en permettant à ces fils de trame de suivre par gravité deux rampes hélicoïdales tournant dans le même sens autour d'un axe vertical.

L'invention concerne également un dispositif d'alimentation en fils de trame et en fils de chaîne d'une machine à souder des treillis métalliques, par le procédé défini dans le paragraphe précédent, ce dispositif, dans lequel les axes de développement longitudinal des dispositifs particuliers d'alimentation en fils de chaîne et en fils de trame sont sensiblement parallèles entre eux, étant caractérisé en ce qu'il comprend un dispositif de transfert de fils de trame à une nappe de fils de chaîne, comportant deux rampes hélicoïdales définies par deux guides porteurs en forme d'hélices de même pas ayant des axes communs sensiblement perpendiculaires à la nappe des fils de chaîne, ce dispositif de transfert étant propre à recevoir par gravité les fils de trame coupés en tronçons et à en changer, également par gravité, l'orientation d'une amplitude angulaire telle que ces fils de trame s'étendent dans une direction sensiblement perpendiculaire à la direction de progression de la nappe des fils de chaîne, le changement d'orientation des fils de trame s'effectuant exclusivement par gravité, sans intervention d'un organe mobile quelconque, le long des deux rampes hélicoïdales.

Le changement d'orientation des fils de trame vers un sens perpendiculaire à celui des fils de chaîne nécessite un pivotement des fils de trame autour d'un axe vertical. Le fil atteignant une longueur de plusieurs mètres, ce pivotement serait difficile à obtenir par des moyens mécaniques dans un temps relativement court. L'inertie et la faible rigidité du fil provoqueraient de fortes vibrations de ce dernier et nuiraient à la bonne marche de l'opération.

Un support rigide tournant avec le fil en le supportant sur toute sa longueur nécessiterait des organes mécaniques assez lurds ainsi qu'un dispositif d'éjection après rotation.

Pour éviter les inconvénients des dispositions possibles dont il vient d'être question, le procédé suivant l'invention prévoit, comme indiqué plus haut, de faire subir aux fils de trame un changement de direction en leur permettant de suivre par gravité deux rampes hélicoïdales.

Dans une forme de réalisation préférée du dispositif de transfert suivant l'invention, le guides porteurs des rampes hélicoïdales sont fixés en haut à un système support supérieur le long d'une ligne d'axe dirigée parallèlement à l'axe longitudinal des fils de trame à la sortie d'un dispositif qui les coupe en tronçons, et en bas, à un système support inférieur, le long d'une ligne d'axe dirigée perpendiculairement à l'axe longitudinal de la nappe des fils de chaîne.

Dans cette forme de réalisation préférée, les guides porteurs constituant l'une des rampes s'étendent entre une partie d'une ligne d'axe de système support supérieur et une partie d'une ligne d'axe de système support inférieur, l'autre rampe s'étendant entre une autre partie d'une autre ligne d'axe de système support supérieur et une autre partie d'une autre ligne d'axe de système support inférieur, les deux rampes se situant de part et d'autre d'une droite idéale perpendicualire à la nappe des fils de chaîne et par rapport à laquelle les deux rampes tournent dans le même sens.

Les fils de trame coupés à longueur ou baguettes, qui descendent sous l'action de leur propre poids le long des deux rampes, pivotent ainsi par rapport à cette droite idéale.

On décrira maintenant l'invention à titre d'exemple non limitatif sous une forme de réalisation exemplative en se référant aux dessins joints au présent mémoire, sur lesquels:

- la figure 1 est une vue en plan très schématique du dispositif de transfert situé par rapport au systèmes d'alimentation d'une machine à souder, en fils de trame et en fils de chaîne;
- la figure 2 est un schéma théorique pour aider à l'explication du principe de fonctionnement du système de transfert;
- la figure 3 est un schéma théorique analogue à celui de la figure 2, correspondant à une situation réelle;
- la figure 4 est une vue schématique en perspective de l'ensemble du dispositif de transfert;
- la figure 5 est une vue en plan schématique, par-dessus, du dispositif de transfert.

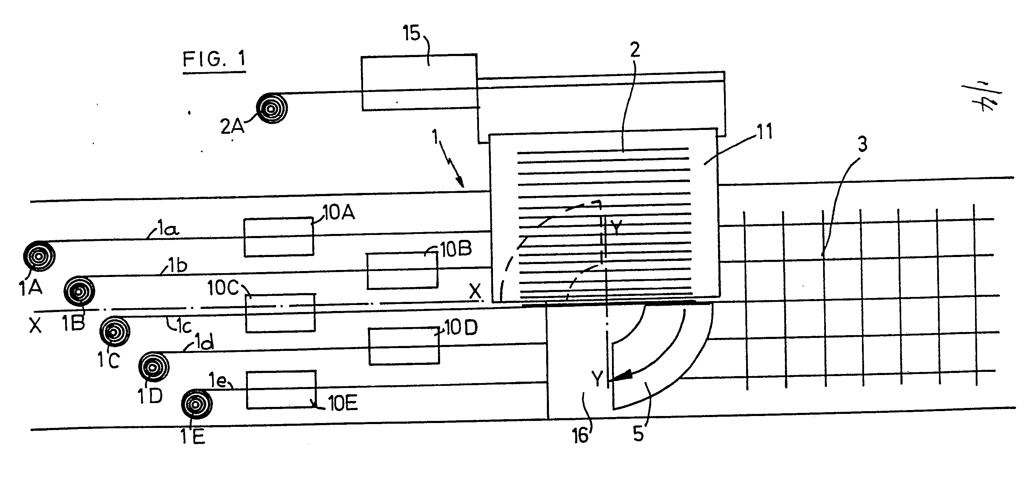

A la figure 1, on a désigné par 1A, 1B, 1C . . . 1E des rouleaux débitant des fils de chaîne 1a, 1b, 1c . . . 1e qui, éventuellement traités par un ensemble d'appareils représentés symboliquement en 10A, 10B, 10C . . . 10E, et en tout cas tendus, constituent par leur ensemble la nappe de fils de chaîne désignée par 1. Des fils de trame sont tirés de rouleaux 2A . . . (dont on a représenté seulement le premier 2A), dressés et coupés dans un ensemble de traitement 15 et déposés, en un ensemble 2 de fils de trame, sur un tablier de transfert latéral 11. De là, ces fils parviennent à un dispositif de transfert désigné par 5 qui, après en avoir changé la direction de sensiblement 90°, les délivre, par exemple, à un magasin (non montré), lequel les dépose à une cadence choisie sur les fils de chaîne 1. Une soudeuse 16 fixe alors les fils de trame sur les fils de chaîne pour en constituer le treillis 3 que l'on veut fabriquer. Le treillis 3 terminé est enroulé sur une ensouple (non montrée) ou coupé aux longueurs voulues. Comme on le voit à la figure 1, les fils de trame sont traités et avancés dans un train d'appareils (15) dont l'axe de développement longitudinal est parallèle à l'axe de développement longitudinal des appareils de traitement des fils de chaîne, qui est aussi l'axe de progression XX de la nappe 1 constituée par ceux-ci.

L'installation ainsi conçue dans laquelle les trains d'appareils intéressant respectivement les fils de chaîne et les fils de trame, sont parallèles entre eux de réduire considérablement l'encombrement des machines et facilite l'accès de chacune de leurs parties. Cette installation a en commun avec les installations connues le fait que les fils de trame coupés à longueur arrivent par-dessus sur la nappe des fils de chaîne.

Comme les fils de trame coupés à longueur et se présentant alors sous forme de «baguettes» 2 sont débités ici dans la même direction que les fils de chaîne 1, ils doivent, avant soudage à ceux-ci, être déposés sur ceux-ci dans une direction YY perpendiculaire à la direction de progression de ces fils de chaîne. C'est le rôle du dispositif 5 de transfert, qui sera décrit maintenant en détail.

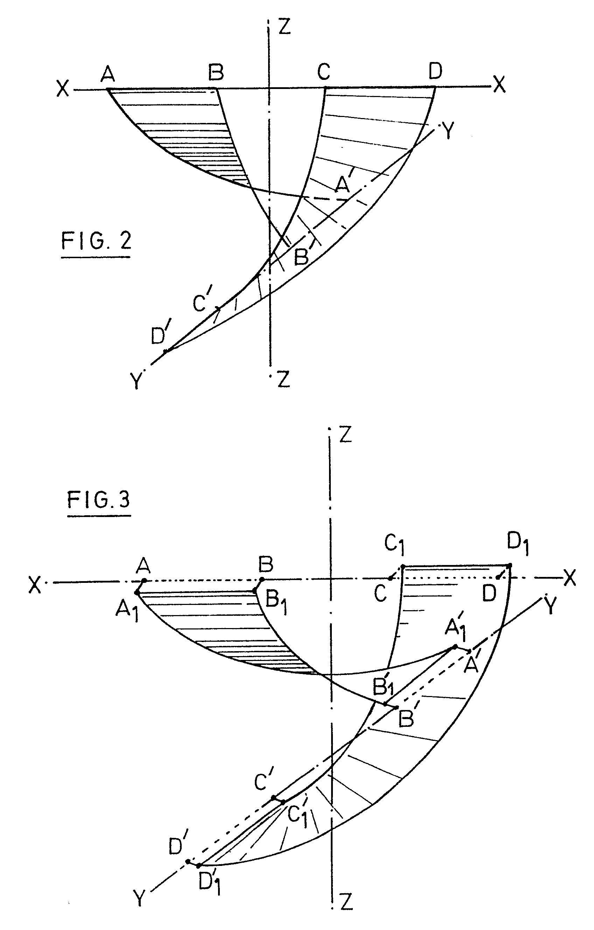

Pour bien comprendre le principe du dispositif, on considérera d'abord la figure 2 sur laquelle on voit deux rampes formées de tapis hélicoïdaux continus, AB–A'B' et CD–C'D'. Ces tapis tournent dans le même sens autour d'un axe ZZ. Les segments AB et CD appartiennent à une même ligne droite horizontale XX qui se trouve à un niveau supérieur, tandis que les segments A'B' et C'D' appartiennent à une même ligne droite horizontale YY qui se trouve à un niveau inférieur. Les lignes droites XX et ZZ font ici dans l'espace, l'une avec l'autre, un angle de 90°.

On comprend que si l'on plaçait à la partie supérieure des deux rampes, dans l'alignement des segments AB, CD et dans le plan des deux rampes une baguette d'une longueur voisine de la distance entre A et D, cette baguette descendrait le long des deux tapis sous l'action de son propre poids, et les quitterait le long des segments A'B', C'D' de la ligne droite YY, c'est-à-dire que le dispositif constitué par les deux rampes aurait transféré la baguette d'un niveau supérieur à un niveau inférieur, tout en changeant sa direction de 90°.

Dans une réalisation matérielle d'un dispositif fonctionnant sur le principe qui vient d'être exposé, il faut tenir compte du fait que les baguettes ont en réalité un certain diamètre et qu'il est donc impossible de les faire descendre dans le plan même des rampes. Il faut aussi déposer les baguettes sur les deux rampes à la fois. Ceci n'est possible que si l'on déplace légèrement les deux rampes par rapport à la position qu'elles occupent sur la figure 2. On voit sur la figure 3 la position qu'auront les rampes en fait. Le segment de départ de la première rampe est ici $A_1B_1$ (parallèle au segment AB mais en avant de ce segment pour un observateur placé devant la figure). Le segment d'arrivée de cette même rampe, dans le plan horizontal inférieur, se situe en $A'_1B'_1$ (à gauche de l'axe YY pour le même observateur). L'autre rampe est déplacée en sens contraire, en sorte que son segment de départ soit $C_1D_1$, à droite de l'axe YY pour l'observateur. Dans ces conditions, une baguette matérielle de diamètre inférieur aux décalages égaux $AA_1 = CC_1$ pourrait être déposée en haut des rampes avec son axe longitudinal en coïncidence avec l'axe XX, et cette baguette quitterait le dispositif au moment où son axe longitudinal atteindrait la position de l'axe YY.

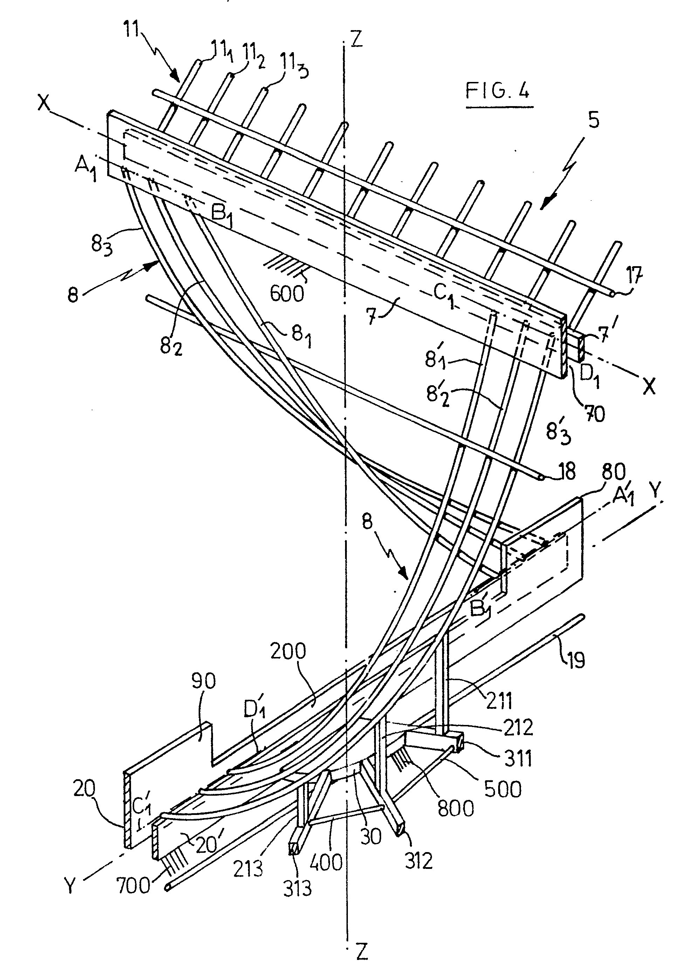

Un autre caractère de la réalisation effective du dispositif dont le principe de fonctionnement a été exposé à l'aide de la figure 2 consiste en ce que les rampes sont en fait réalisées non pas sous la forme de tapis à surface continue, mais par des guides porteurs en forme d'hélices ayant, dans la présente forme de réalisation, un axe commun, l'axe ZZ des figures 2 et 3. Ces guides porteurs sont faits de préférence de barres 8 (voir figure 4) de section ronde afin que les baguettes qui seront déposées sur eux ne les touchent que ponctuellement, ce qui diminuera le frottement et empêchera que des saletés tombées sur les rampes ne troublent la régularité du mouvement de descente des baguettes, comme cela se produirait si les rampes étaient formées de tapis. Les figures ne représentent que trois guides porteurs pour chaque rampe, mais il est évident que ce nombre n'est pas limitatif.

La figure 4 représente schématiquement et en perspective l'ensemble des éléments du dispositif de transfert 5. On y voit, désignés par $8_1$, $8_2$, $8_3$ et par $8'_1$, $8'_2$, $8'_3$, les guides porteurs des deux nappes hélicoïdales dont il a été question précédemment. Ces nappes s'étendent entre un système support supérieur comprenant deux barres parallèles 7 et 7' disposées de part et d'autre de l'axe XX et un système support inférieur comprenant deux barres parallèles 20, 20' disposées de part et d'autre de l'axe YY. On voit, tracée sur la barre 7', une lingne d'axe représentant le segment $C_1D_1$ de la figure 3, et sur la barre 7, une ligne d'axe représentant le segment $A_1B_1$ de la figure 3. C'est le long de ces lignes d'axe que, dans la présente forme de réalisation, sont fixées aux barres 7, 7' les extrémités des guides porteurs $8_1$, $8_2$, $8_3$ et $8'_1$, $8'_2$, $8'_3$ appartenant respectivement aux deux rampes. (Les extrémités de ces guides porteurs pourraient n'être pas fixées aux barres 7 et 7', mais pourraient être portées par des supports particuliers à condition que ces extrémités soient assez proches des barres 7 et 7' respectives pour qu'une baguette parvenant dans le passage 70 compris entre les barres 7 et 7' tombe sur ces guides porteurs). On voie en 11 un ensemble de barrettes parallèles $11_1$, $11_2$, $11_3$ qui amènent les baguettes dont l'une a été représentée en 17, au passage 70 dont il vient d'être question. Pour s'opposer à ce que les baguettes dévalant le plan incliné 11 dépassent la barre 7 et échappent ainsi au passage 70, la barre 7 est de hauteur supérieure à celle de la barre 7' pour constituer ainsi une butée. Au lieu de cette disposition, on pourrait munir la barre 7 de pattes verticales formant butées.

Les baguettes qui ont traversé le passage 70 tombent sur les deux nappes de guides porteurs 8 et descendent le long de celles-ci, comme le montre la baguette 18, pour atteindre le système support inférieur constitué des deux barres 20, 20' auxquelles sont fixées respectivement, le long de lignes d'axes $A'_1$, $B'_1$ sur la barre 20 et $C'_1$, $D'_1$ sur la barre 20', les extrémités des guides porteurs $8_1$, $8_2$, $8_3$, et $8'_1$, $8'_2$, $8'_3$. L'extrémité de la barre 20 opposée à l'extrémité de la barre 20' où s'attachent les extrémités inférieures des guides porteurs $8'_1$, $8'_2$, $8'_3$, est surélevée, comme montré en 90. De même, l'extrémité de la barre 20' opposée à l'extrémité de la barre 20 où s'attachent les extrémites inférieures des guides porteurs $8_1$, $8_2$, $8_3$, est surélevée comme montré en 80. Les surélévations 80 et 90 font office de butées à l'égard de baguettes arrivant au système support inférieur, de façon à assurer que ces baguettes traversent bien le passage 200 entre les barres 20 et 20'. Au lieu des surélévations 80 et 90, les barres 20 et 20' pourraient porter des pattes faisant également office de butées.

On a représenté en 19 une baguette qui a passé par ce passage 200 et qui est prête à être livrée au magasin (non représenté) d'alimentation de la soudeuse.

Comme on le voit également à la figure 4, les guides porteurs sont soutenus de distance en distance par des montants 211, 212, 213 portés eux-mêmes par des poutres radiales 311, 312, 313 reliées entre elles par des bras raidisseurs 400, 500 et rayonnant à partir de l'axe idéal ZZ de l'ensemble du dispositif de transfert. Pour la simplicité, on n'a représenté que les supports d'un guide porteur, en l'occurrence $8'_3$, des supports analogues étant prévus pour les guides porteurs $8'_1$ et $8'_2$. Un système semblable, non visible à la figure 4, soutient les guides porteurs $8_1$, $8_2$, $8_3$.

Les poutres radiales 311, 312, 313 sont fixées à la périphérie d'un plateau 30 en forme de quart de cercle qui est lui-même fixé à la barre 20'. Un plateau semblable 30' est prévu pour des poutres 311', 312', 313' servant de supports à des montants semblables aux montants 211, 212, 213 ... etc., pour soutenir les guides porteurs $8_1$, $8_2$, $8_3$. Ce système semblable n'a pas été représenté à la figure 4 pour ne pas l'obscurir.

Il est bien évident que le dispositif tout entier est équipé, partout où cela est nécessaire, d'éléments de soutien et de liaison qui assurent sa rigidité et sa résistance aux chocs et aux vibrations provoqués par les mouvements des baguettes dans leur course descendante à travers le dispositif de transfert. Ces moyens de liaison divers n'ont pas été représentés au dessin pour éviter de l'obscurcir, mais ils sont symbolisés par des hachures telles qu'indiquées en 600 pour la barre 7 et en 700 pour la barre 20' afin d'exprimer leur solidarité avec le bâti de la machine. Il en a été fait de même (en 800) pour le plateau 20 servant de liaison centrale aux poutres 311, 312, 313.

On remarquera que l'angle entre l'axe XX (direction des fils de trame au départ) et l'axe YY (direction des fils à l'arrivée, perpendicualires aux fils de chaîne) pourrait être différent de 90° si les directions de débit des appareils de traitement (15 et 10A, etc ...) faisant entre elles un angle non nul.

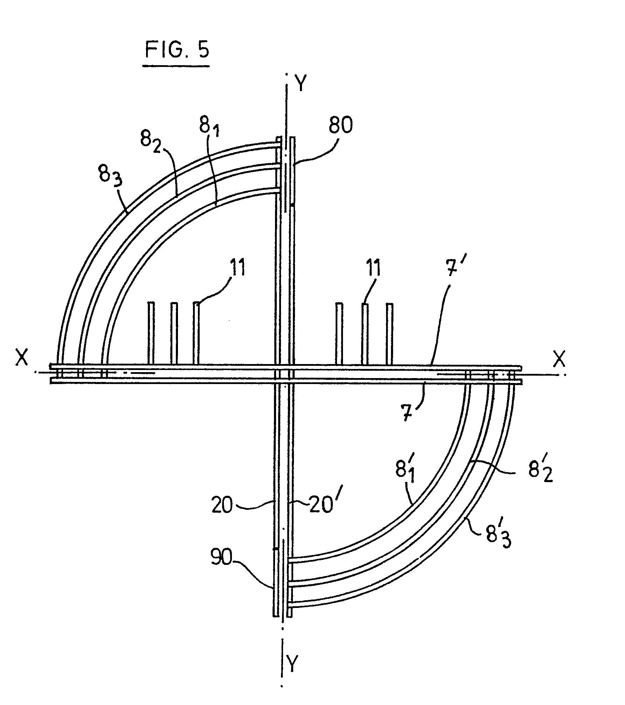

La figure 5 est une vue en plan qui se comprend d'elle-même et sur laquelle on a reporté les indices de référence des éléments principaux du dispositif de transfert, qui ont été décrits ci-avant. Une partie seulement des barrettes 11 a été montrée à la figure 5 qui ne montre pas, d'ailleurs, les systèmes de support des guides porteurs.

**Revendications**

1. Procédé d'alimentation en fils de trame d'une machine à souder (16) des treillis (3), dans lequel on fait avancer une nappe de fils de chaîne parallèles (1) vers un poste de soudage, et de fils de trame (2) découpés à longueur vers le même poste de soudage, caractérisé en ce qu'on fait avancer ces fils de chaîne (1) et ces fils de trame (2) dans sensiblement la même direction et en ce qu'on fait subir aux fils de trame (2), situés à un niveau supérieur à celui des fils de chaîne (1), sous l'effet de la pesanteur, un changement de direction d'une amplitude angulaire telle que ces fils de trame (2) s'étendent dans une direction (YY) sensiblement perpendiculaire aux fils de chaîne (1) lorsqu'ils atteignent, ceux ci, en permettant à ces fils de trame (2) de suivre par gravité deux rampes hélicoïdales (AB–A'B' et CD–C'D' tournant dans le même sens autour d'un axe vertical (ZZ).

2. Procédé suivant la revendication 1, caractérisé en ce qu'on fait subir aux fils de trame (2) un changement de direction d'une amplitude de 90°.

3. Dispositif d'alimentation en fils de trame (2) et en fils de chaîne (1) d'une machine (16) à souder des treillis métalliques par le procédé suivant la revendication 1, dans lequel dispositif les axes de développement longitudinal des dispositifs particuliers d'alimentation en fils de chaîne et en fils de trame sont sensiblement parallèles entre eux, caractérisé en ce qu'il comprend un dispositif de transfert (5) de fils de trame (2) à une nappe de fils de chaîne (1) comportant deux rampes hélicoïdales (8) définies par des guides porteurs ($8_1$, $8_2$, $8_3$; $8'_1$, $8'_2$, $8'_3$) en forme d'hélices de même pas ayant des axes communs (ZZ) sensiblement perpendiculaires à la nappe des fils de chaîne (1), ce dispositif de transfert étant propre à recevoir par gravité les fils de trame (2) coupés en tronçons et à en changer, également par gravité, l'orientation d'une amplitude angulaire telle que ces fils de trame (2) s'étendent dans une direction sensiblement perpendiculaire à la direction de progression (XX) de la nappe des fils de chaîne (1), le changement d'orientation des fils de trame s'effectuant exclusivement par gravité, sans intervention d'un organe mobile quelconque, le long des deux rampes hélicoïdales (8).

4. Dispositif suivant la revendication 3, caractérisé en ce que les guides porteurs ($8_1$, $8_2$, $8_3$; $8'_1$, $8'_2$, $8'_3$) sont fixés en haut à un système support supérieur (7,7') le long d'un eligne d'axe (XX) dirigée parallèlement à l'axe longitudinal des fils de trame (2) à la sortie d'un dispositif (15) qui les coupe en tronçons, et en bas à un système support inférieur (20, 20') le long d'une ligne d'axe (YY') dirigée perpendiculairement à l'axe longitudinal de la nappe des fils de chaîne (1).

5. Dispositif suivant les revendications 3 et 4, caractérisé en ce que l'une ($8_1$, $8_2$, $8_3$) des rampes (8) s'étend entre une partie d'une ligne d'axe ($A_1$, $B_1$) du système support supérieur (7, 7') et une partie d'une ligne d'axe ($A'_1$, $B'_1$) du système support inférieur (20, 20'), et en ce que l'autre rampe ($8'_1$, $8'_2$, $8'_3$) s'étend entre une autre partie d'une ligne d'axe ($C_1$, $D_1$) du système support supérieur (7, 7') et une autre partie d'une autre ligne d'axe ($C'_1$, $D'_1$) du système support inférieur (20, 20') les deux rampes ($8_1$, $8_2$, $8_3$; $8'_1$, $8'_2$, $8'_3$) se situant de part et d'autre d'une droite idéale (ZZ), perpendiculaire à la nappe des fils de chaîne (1), et par rapport à laquelle les deux rampes ($8_1$, $8_2$, $8_3$; $8'_1$, $8'_2$, $8'_3$) tournent dans le même sens.

6. Dispositif suivant l'une quelconque des revendications 3 à 5, caractérisé en ce que le système support supérieur (7, 7') des guides porteurs ($8_1$, $8_2$, $8_3$; $8'_1$, $8'_2$, $8'_3$) comprend pour chaque rampe (8) une barre horizontale (7, 7') à laquelle aboutissent les guides porteurs ($8_1$, $8_2$, $8_3$) constituant cette rampe (8), les deux barres horizontales (7, 7') étant parallèles entre elles et définissant entre elles un passage (70) pour les fils de trame (17), et l'une de ces barres comportant au moins une butée propre à empêcher les fils de trame arrivants (17) d'échapper à ce passage (70).

7. Dispositif suivant l'une quelconque des revendications 3 à 6, caractérisé en ce que le système support inférieur (20, 20') des guides porteurs ($8_1$, $8_2$, $8_3$; $8'_1$, $8'_2$, $8'_3$) comprend pour chaque rampe (8) une barre horizontale (20, 20'), ces barres (20, 20') étant parallèles entre elles et formant entre elles un passage (200) pour les fils de trame (18), chacune desdites barres (20, 20') comportant une partie à laquelle aboutissent les guides porteurs ($8_1$, $8_2$, $8_3$; $8'_1$, $8'_2$, $8'_3$) d'une des rampes (8), et une partie qui fait face à l'autre rampe et qui comporte au moins une butée (80, 90) propre à empêcher les fils de trame arrivants (18) d'échapper au passage susdit (200).

8. Dispositif suivant l'une quelconque des revendications 6 et 7, caractérisé en ce que les points d'aboutissement des guides porteurs ($8_1$, $8_2$, $8_3$; $8'_1$, $8'_2$, $8'_3$) aux barres respectives (7, 7'; 20, 20') sont en même temps des points d'attache des guides porteurs ($8_1$, $8_2$, $8_3$; $8'_1$, $8'_2$, $8'_3$) à ces barres (7, 7'; 20, 20').

## Patentansprüche

1. Verfahren zum Speisen einer Schweissmaschine (16) für Gitter (3) mit Schussdrähten, bei welchem man ein Bündel paralleler Kettdrähte zu einem Schweissapparat und längenmässig zugeschnittene Schussdrähte (2) zu demselben Schweissapparat fortbewegt, dadurch gekennzeichnet, dass man diese Kettdrähte (1) und diese Schussdrähte (2) in im wesentlichen derselben Richtung fortbewegt, und dass man die Schussdrähte (2), die sich in einem höheren Niveau befinden als die Kettdrähte (1), unter der Wirkung der Schwerkraft eine Richtungsänderung um ein derartiges Winkelausmass erfahren lässt, dass diese Schussdrähte (2) in einer zu den Kettdrähten (1) im wesentlichen senkrechten Richtung (YY) verlaufen, wenn sie diese erreichen, wobei diese Schussdrähte (2) unter der Schwerkraft zwei schraubenförmigen Rampen (AB–A' B' und CD–C'D') folgen können, die sich um eine vertikale Achse (ZZ) in derselben Richtung drehen.

2. Verfahren nach Anspruch 1, dadurch gekennzeichnet, dass man die Schussdrähte (2) eine Richtungsänderung um einen Bereich von 90 °C erfahren lässt.

3. Vorrichtung zum Speisen einer Schweissmaschine (16) für Metallgitter mit Schussdrähten (2) und Kettdrähten (1) mittels des Verfahrens nach Anspruch 1, bei welcher Vorrichtung die Längsabwicklungsachsen der eigentlichen Einrichtungen zum Speisen mit Kettdrähten und Schussdrähten im wesentlichen parallel zueinander sind, dadurch gekennzeichnet, dass sie eine Einrichtung (5) zum Transportieren von Schussdrähten (2) zu einem Bündel von Kettdrähten (1) umfasst, welche zwei schraubenförmige Rampen (8) aufweist, die durch Tragführungen ($8_1$, $8_2$, $8_3$; $8'_1$, $8'_2$, $8'_3$) in Form von Schraubenlinien gleicher Steigung mit gemeinsamen, zum Bündel von Kettdrähten (1) im wesentlichen senkrechten Achsen (ZZ) festgelegt sind, wobei diese Transporteinrichtung zur Aufnahme der in Abschnitte geschnittenen Schussdrähte (2) durch die Schwerkraft und zur Richtungsänderung derselben, ebenfalls durch die Schwerkraft, um ein derartiges Winkelausmass geeignet sind, dass diese Schussdrähte (2) in einer zur Progressionsrichtung (XX) des Bündels der Kettdrähte (1) im wesentlichen senkrechten Richtung verlaufen, wobei die Richtungsänderung der Schussdrähte ausschliesslich durch die Schwerkraft ohne Mitwirken irgendeines beweglichen Teils entlang der beiden schraubenförmigen Rampen (8) erfolgt.

4. Vorrichtung nach Anspruch 3, dadurch gekennzeichnet, dass die Tragführungen ($8_1$, $8_2$, $8_3$; $8'_1$, $8'_2$, $8'_3$) oben an einem oberen Tragsystem (7, 7') entlang einer Achslinie (XX), die parallel zur Längsachse der Schussdrähte (2) am Ausgang einer diese in Abschnitte schneidenden Einrichtung (15) gerichtet ist, und unten an einem unteren Tragsystem (20, 20') entlang einer Achslinie (YY'), die senkrecht zur Längsachse des Bündels der Kettdrähte (1) gerichtet ist, befestigt sind.

5. Vorrichtung nach den Ansprüchen 3 und 4, dadurch gekennzeichnet, dass sich eine ($8_1$, $8_2$, $8_3$) der Rampen (8) zwischen einem Teil einer Achslinie ($A_1$, $B_2$) des oberen Tragsystems (7, 7') und einem Teil einer Achslinie ($A'_1$, $B'_1$) des unteren Tragsystems (20, 20') erstreckt, und dass sich die andere Rampe ($8'_1$, $8'_2$, $8'_3$) zwischen einem anderen Teil einer Achslinie ($C_1$, $D_1$) des oberen Tragsystems (7, 7') und einem anderen Teil einer anderen Achslinie ($C'_1$, $D'_1$) des unteren Tragsystems (20, 20') erstreckt, wobei sich die beiden Rampen ($8_1$, $8_2$, $8_3$; $8'_1$, $8'_2$, $8'_3$) zu beiden Seiten einer Idealgeraden (ZZ) befinden, welche senkrecht zum Bündel der Kettdrähte (1) verläuft und gegenüber welcher sich die beiden Rampen ($8_1$, $8_2$, $8_3$; $8'_1$, $8'_2$, $8'_3$) in derselben Richtung drehen.

6. Vorrichtung nach einem der Ansprüche 3 bis 5, dadurch gekennzeichnet, dass das obere Tragsystem (7, 7') der Tragführungen ($8_1$, $8_2$, $8_3$; $8'_1$, $8'_2$ $8'_3$) für jede Rampe (8) eine horizontale Stange (7, 7') umfasst, an welche die diese Rampe (8) bildenden Tragführungen ($8_1$, $8_2$, $8_3$) anstossen, wobei die beiden horizontalen Stangen (7, 7') zueinander parallel sind und zwischen ihnen einen Durchlass (70) für die Schussdrähte (17) begrenzen, und wobei eine dieser Stangen mindestens einen Anschlag aufweist, der ausgebildet ist zu verhindern, dass die ankommenden Schussdrähte (17) aus diesem Durchlass (70) entweichen.

7. Vorrichtung nach einem der Ansprüche 3 bis 6, dadurch gekennzeichnet, dass das untere Tragsystem (20, 20') der Tragführungen ($8_1$, $8_2$, $8_3$; $8'_1$, $8'_2$, $8'_3$) für jede Rampe (8) eine horizontale Stange (20, 20') umfasst, wobei diese Stangen (20, 20') zueinander parallel sind und zwischen ihnen einen Durchlass (200) für die Schussdrähte (18) bilden, wobei jede dieser Stangen (20, 20') einen Teil aufweist, an den die Tragführungen ($8_1$, $8_2$, $8_3$; $8'_1$, $8'_2$, $8'_3$) einer der Rampen (8) anstossen, und einen Teil, welcher der anderen Rampe gegenüberliegt und mindestens einen Anschlag (80, 90) aufweist, der ausgebildet ist zu verhindern, dass die ankommenden Schussdrähte (18) aus dem Durchlass (200) entweichen.

8. Vorrichtung nach einem der Ansprüche 6 und 7, dadurch gekennzeichnet, dass die Punkte, an denen die Tragführungen ($8_1$, $8_2$, $8_3$; $8'_1$, $8'_2$, $8'_3$) an den jeweiligen Stangen (7, 7'; 20, 20') anstossen, gleichzeitig Befestigungspunkte für die Tragführungen ($8_1$, $8_2$, $8_3$; $8'_1$, $8'_2$, $8'_3$) an diesen Stangen (7, 7'; 20, 20') sind.

## Claims

1. Process for feeding weft wires to a machine (16) for welding meshes (3), in which a web of parallel warp wires (1) is moved towards a welding station, and a web of weft wires (2) which have been cut to length is moved towards the same welding station, characterized in that these warp wires (1) and weft wires (2) ares substantially moved in the same direction and in that the weft wires (2) which are at a higher level than the warp wires (1) are subjected under the effect of gravity, to a change of direction of such an angular amplitude that the weft wires (2) are substantially disposed perpendicular (YY) to the warp wires (1) when they reach them, these weft wires (2) being allowed to follow under the effect of gravity two helicoid sheets (AB–A'B') and CD–C'D') which rotate in the same direction about a vertical axis (ZZ).

2. Process according to claim 1, characterized in that the weft wires (2) are subjected to a change in direction of an amplitude of 90°.

3. Device of feeding weft wires (2) and warp wires (1) to a machine (16) for welding metallic meshes by the process according to claim 1, in which the axes of longitudinal movement of particular devices of feeding weft wires and warp wires are substantially parallel to each other, characterized in that it comprises a transfer device (5) of weft wires (2) to a web of warp wires (1), said transfer device (5) having two helicoid sheets (8) defined by support guides ($8_1$, $8_2$, $8_3$; $8'_1$, $8'_2$, $8'_3$) having the shape of helices which have the same pitch and have common axes (ZZ) which are substantially perpendicular to the web of warp wires (1), this transfer device being able to receive, under the gravity, the weft wires (2) which have been cut to length and to change, also under the gravity, the direction thereof on such an angular amplitude that these weft wires (2) extend in a direction which is substantially perpendicular to the direction (XX) in which the web of warp wires (1) advance, the change in direction of weft wires (1) being effected by gravity alone without the interference of any moveable member, along the two helicoid sheets (8).

4. Device according to claim 3, characterized in that the support guides ($8_1$, $8_2$, $8_3$; $8'_1$, $8'_2$, $8'_3$) are attached at their upper ends to an upper support system (7, 7') along an axis (XX) which is parallel to the longitudinal axis of the weft wires (2) at the outlet of a device (15) which cuts them to length, and at their lower ends to a lower support system (20, 20') along an axis (YY) which is perpendicular to the longitudinal axis of the web of warp wires (1).

5. Device according to claims 3 and 4, characterized in that one $(8_1, 8_2, 8_3)$ of the sheets (8) extends between a section of an axis $(A_1B_1)$ of the upper support system (7, 7') and a section of an axis $(A'_1B'_1)$ of the lower support system (20, 20'), and in that the other sheet $(8'_1, 8'_2, 8'_3)$ extends between another section of an axis $(C_1D_1)$ of the upper support system (7, 7') and another section of another axis $(C'_1D'_1)$ of the lower support system (20, 20'), the two sheets $(8_1, 8_2, 8_3; 8'_1, 8'_2, 8'_3)$ being positioned on either side of an ideal line (ZZ), perpendicular to the direction of the warp wires (1), and about which the two sheets $(8_1, 8_2, 8_3; 8'_1, 8'_2, 8'_3)$ rotate in the same direction.

6. Device according to anyone of the claims 3 to 5, characterized in that the upper support system (7, 7') of the support guides $(8_1, 8_2, 8_3; 8'_1, 8'_2, 8'_3)$ comprises for each sheet (8) a horizontal bar (7, 7') in which the support guides $(8_1, 8_2, 8_3)$ constituting this sheet (8) end, the two horizontal bars (7, 7') being parallel to each other and forming between them a passage (70) for the weft wires (17), and one of these bars having at least one stop suitable for preventing the arriving weft wires (17) from overshooting this passage (70).

7. Device according to anyone of the claims 3 to 6, characterized in that the lower support system (20, 20') of the support guides $(8_1, 8_2, 8_3; 8'_1, 8'_2, 8'_3)$ has, for each sheet (8), a horizontal bar (20, 20'), these bars (20, 20') being parallel to each other and forming between them a passage (200) for the weft wires (18), each of said bars (20, 20') having a section in which the support guides $(8_1, 8_2, 8_3; 8'_1, 8'_2, 8'_3)$ of one of the sheets (8) end, and a section which is in front of the other sheet and which has at least one stop (80, 90) for preventing the arriving weft wires (18) from overshooting said passage (200).

8. Device according to anyone of the claims 6 and 7, characterized in that the ends of the support guides $(8_1, 8_2, 8_3; 8'_1, 8'_2, 8'_3)$ at the bars (7, 7'; 20, 20') are also attachment points of the support guides $(8_1, 8_2, 8_3; 8'_1, 8'_2, 8'_3)$ to these bars (7, 7'; 20, 20').

FIG. 1

FIG. 2

FIG. 3

11

FIG. 4

0 125 716

3/4

13

4/4

FIG. 5